# EUROPEAN PATENT SPECIFICATION

(11) **EP 0 696 037 B1**
(45) Date of publication and mention of the grant of the patent: **22.12.1999**
(21) Application number: 95305292.5
(22) Date of filing: 28.07.1995
(51) Int. Cl.: H01G 9/025

(54) **Solid electrolyte capacitor having conductive polymer compounds as solid electrolyte and method of manufacturing the same**
Festelektrolytkondensator mit leitendem Polymer als Festelektrolyt und Herstellungsverfahren
Condensateur à électrolyte solide ayant des composants de polymères conducteurs comme électrolyte solide et méthode de fabrication

(30) Priority: 02.08.1994 JP 21166694
(43) Date of publication of application: 07.02.1996
(73) Proprietor: NEC CORPORATION, Tokyo (JP)
(72) Inventor: Kobayashi, Atsushi, Minato-ku, Tokyo (JP); Satoh, Masaharu, Minato-ku, Tokyo (JP); Ishikawa, Hitoshi, Minato-ku, Tokyo (JP); Amano, Kosuke, Minato-ku, Tokyo (JP); Fukaumi, Takashi, Minato-ku, Tokyo (JP)
(74) Representative: Cropp, John Anthony David

(56) References cited:
- DE-A- 4 243 091
- DATABASE WPI Week 9519 Derwent Publications Ltd., London, GB; AN 95-144916 XP002001833 & JP-A-07 070 294 (NEC CORP) , 14 March 1995
- DATABASE WPI Week 9219 Derwent Publications Ltd., London, GB; AN 92-155755 XP002001834 & JP-A-04 094 109 (KAO CORP) , 26 March 1992

## Description

### BACKGROUND OF THE INVENTION

### (1) Field of the Invention

The present invention relates to solid electrolytic capacitors comprising conductive polymer compounds as a solid electrolyte and methods of manufacturing the same, and more particularly to solid electrolytic capacitors, which comprises conductive polypyrrole in the form of grains with mean grain sizes being no greater than 0.2 µm as the solid electrolyte, as well as having high capacitance efficiency factors (covering power) and excellent frequency characteristics, and methods of manufacturing the same.

### (2) Description of the Related Art

Along with advances in science and technology, there is a need for scaling down of electronic devices and, with respect to capacitors, there is an increasing demand for a solid electrolytic capacitor of large capacity having excellent frequency characteristics up to a high frequency range.

A usual solid electrolytic capacitor has a structure comprising a first electrode (anode electrode) which is constituted by a porous body of a valve action metal, such as tantalum or aluminum, and a second electrode (cathode electrode) constituted by a solid electrolyte formed on the surface of an oxide film formed as dielectric on the porous metal body. The solid electrolyte of the capacitor is required to have two functions, i.e., a function of electrically connecting the entire dielectric inside the porous metal body and electrode leads, and a function of recovering electric short-circuiting which develops due to defects in the dielectric oxide film. Conventionally, manganese dioxide, 7, 7', 8, 8'-tetracyanoquinodimethane complex salt, conductive polypyrrole, etc. have been used as a solid electrolyte. Among these compounds, conductive polypyrrole particularly has excellent frequency characteristics because its conductivity is high compared to other solid electrolytes. Japanese Patent Application Kokoku Publication No. Hei 4-56445 shows a solid electrolytic capacitor which comprises polypyrrole or its alkyl substitution product as a solid electrolyte, and teaches a method of manufacture by electrolytic polymerization of pyrrole and dipping in a polypyrrole solution. Also, there is a report on a process of pyrrole polymerization using such an oxidizing agent as ferric salt for polypyrrole synthesis. Further, Walker et al, "Journal of Polymer Science, Part A, Polymer Chemistry", Vol. 26, 1988, p. 1285, shows examples of pyrrole polymerization using ferric dodecylbenzene sulfonic acid as an oxidizing agent. Still further, Japanese Patent Application Kokai Publication No. Hei 3-46214 shows a method of solid electrolytic capacitor manufacture using a polypyrrole synthesis process, in which ferric dodecylbenzene sulfonic acid and a methanol solution of pyrrole are mixed together at a temperature no higher than -30°C, followed by the temperature increase to higher than -20°C for polymerization. This publication, however, does not teach any specific method of obtaining a solid electrolytic capacitor, which has high capacitance efficiency factors and is also stable with respect to thermal stress.

DE-A-42 43 091 describes a solid electrolytic capacitor the anodized Al electrode foil of which is impregnated with a pyrrole solution containing a sulfonic acid salt and water, followed by immersion into an oxidizing bath containing a Fe(III)-based oxidizing agent.

Capacitors comprising manganese dioxide as an electrolyte have insufficient high frequency characteristics because of high electrolyte resistance. Capacitors comprising 7,7',8,8'-tetracyanoquinodimethane complex salt as a solid electrolyte has a problem that the soldering heat resistance is lacking because of a low melting point. Further, capacitors with a solid electrolyte thereof constituted by conductive polypyrrole obtained through synthesis by a chemical polymerization process, have a problem of separation of the solid electrolyte from the dielectric surface due to thermal stress or repeated moisture absorption and drying, although the electrolyte has high conductivity and there is soldering heat resistance. When the solid electrolyte is separated, the capacitance of the capacitor is reduced, and the equivalent series resistance in the high frequency range is increased thereby increasing the impedance. Polypyrrole, on the other hand, can be synthesized by an electrolytic polymerization process as well. However, with conductive polypyrrole obtained by this process, the dielectric capacitance efficiency factor based on thermal stress or the like is small. Regarding these problems, the publications referred to above show only initial characteristics, and the phenomenon of separation of the solid electrolyte from the dielectric surface due to thermal stress or the like and a method of solving this problem are not shown.

### SUMMARY OF THE INVENTION

An object of the invention, therefore, is to solve the above technical problems inherent in the prior art, and to provide a solid electrolytic capacitor, which is free from separation of the solid electrolyte from the dielectric surface by thermal stress or repeated moisture absorption and drying, and which provides high capacitance and excellent stability.

According to one aspect of the invention, there is provided a solid electrolytic capacitor comprising, as an electrolyte, polypyrrole being in a grain form with mean grain sizes no greater than 0.2µm, obtainable by oxidatively polymerizing an oxidizing agent composed of a sulfonic acid compound as an anion and a metal cation selected from Ag⁺, Cu²⁺, Fe³⁺, Al³⁺, Ce⁴⁺, W⁶⁺, Cr⁶⁺, Mn⁷⁺ and Sn⁴⁺ with pyrrole as a monomer, wherein said polymerisation uses a polymerisation solution containing a mixture of the oxidising agent and the pyrrole and no less than 2% by weight of water, agent being unity or above. It has been found by the inventors that, by selecting the mean grain size so as to be no greater than 0.2µm, it is possible to achieve the object mentioned above. This is one aspect of the invention.

In a further aspect, the invention provides a method which is defined by the features of claim 2.

The invention requires that the polypyrrole be in the form of grains but their shapes are not particularly limited. However, if the mean grain sizes become small and uniform, there is a tendency for the development of an increased leakage current in the capacitor. Thus, a preferred range of the mean grain sizes is between 0.01 and 0.2 µm.

In carrying out the invention, any sulfonic acid compound as an anion constituting the oxidizing agent may be used so long as it has a sulfonic acid group. Examples are alkylbenzene sulfonic acid ions such as p-toluene sulfonic acid ion, ethylbenzene sulfonic acid ion, octylbenzene sulfonic acid ion, and dodecylbenzene sulfonic acid ion; naphthalene sulfonic acid ions such as β-naphthalene sulfonic acid ion and butylnaphthalene sulfonic acid ion; organic sulfonic acid ions such as sulfosuccinic acid ion and N-acylsulfonic acid ion; alkylsulfonic acid ion of C₈ to C₁₂; and α-olefinsulfonic acid ion. Also, the high valency transition metal ions as cations constituting the oxidizing agents are Ag⁺, Cu²⁺, Fe³⁺, Al³⁺, Ce⁴⁺, W⁶⁺, Cr⁶⁺, Mn⁷⁺ and Sn⁴⁺. Among these anion/cation combinations, ferric alkylnaphthalene sulfonic acid, cupric alkylnaphthalene sulfonic acid, and ferric alkylbenzene sulfonic acid are suitable from the standpoint of ease of preparation of small grain size conductive polypyrrole.

In explaining the invention, by the term "pyrrole" is meant a compound having the pyrrole skeleton and a substitute group at the third or N-th location or a mixture of such a compound and pyrrole. Examples of the substitute group are hydroxyl group, acetyl group, carboxyl group and alkyl group.

According to the invention, polypyrrole is formed with the above oxidizing agent by the process as defined in the claims. From the standpoint of the effects of the invention, a process in which a polymerization reaction takes place in solution is carried out. Examples of such processes are ones in which an oxidizing agent solution and a pyrrole solution are introduced successively onto the dielectric surface of the porous body for polymerization, ones in which the oxidizing agent and a diluted pyrrole solution are introduced for causing polymerization by utilizing concentration increase with evaporation of the solvent, and ones in which the oxidizing agent and a monomer are mixed at a low temperature and with a condition of suppressed reaction rate, the mixture thus obtained being introduced onto the dielectric surface and then elevated in temperature for polymerization. Any solvent may be used so long as it can dissolve both pyrrole and oxidizing agent. Examples of solvents are methanol, ethanol, isopropylalcohol, acetone, methylethylketone, diethylether, acetonitrile and tetrahydrofuran.

According to the invention, polypyrrole is synthesized by using the above oxidizing agent and pyrrole in a polymerizing solution containing no less than 2% by weight of water with a condition that the mole ratio of the monomer to the oxidizing agent is unity (1) or above. Generally, in oxidative polymerization using an aromatic compound as a monomer, 2 moles of an oxidizing agent are required for one mole of the monomer. Thus, when the efficiency of preparation of conductive polymer is taken into consideration, an adequate mole ratio of the monomer is thought to be about 0.5 with respect to the oxidizing agent. In the method according to the invention, the mole ratio of the monomer is high, and the polymerization solution contains no less than 2% by weight of water. Thus, the synthesized polypyrrole is in the form of grains with mean grain sizes not greater than 0.2 µm. There is no upper limit in the water proportion in the polymerization solution. The water proportion thus can be selected appropriately in a range up to the saturation water content of the solvent.

### BRIEF DESCRIPTION OF THE DRAWINGS

The above and other objects, features and advantages of the present invention will be apparent from the following description of preferred embodiments of the invention explained with reference to the accompanying drawings, in which:
Fig. 1 is a scanning electron microscope photograph of a section of a solid electrolytic capacitor in Example 1 according to the invention;
Fig. 2 is a scanning electron microscope photograph of a section of a solid electrolytic capacitor in Comparison Example 1;
Fig. 3 is a scanning electron microscope photograph of a section of a solid electrolytic capacitor in Comparison Example 1 taken after heat treatment of the capacitor at 200°C for 15 minutes; and
Fig. 4 is a graph showing frequency characteristics of the electrostatic capacitance of solid electrolytic capacitors as sample (1a) in Example 1 according to the invention and comparison sample (2c) in Comparison Example 2.

### PREFERRED EMBODIMENTS OF THE INVENTION

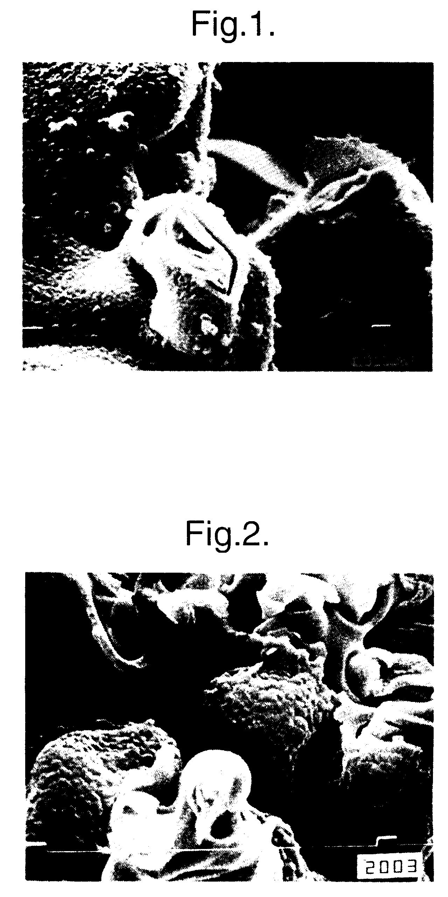

Now, the invention is explained with reference to the drawings. Specifically, Fig. 1 shows a surface structure of polypyrrole inside a pellet with an oxide film obtained after polymerization brought about by dipping a tantalum pellet in a methanol solution, which has been obtained by mixing ferric dodecylbenzene sulfonic acid, pyrrole and water in final proportions of 25, 3.2 and 5% by weight at -70°C, and then increasing the temperature of the system up to room temperature. Fig. 2 shows a surface structure of polypyrrole inside a pellet with an oxide film obtained after polymerization brought about by dipping a tantalum pellet in a methanol solution, which has been obtained by mixing ferric dodecylbenzene sulfonic acid, pyrrole and water in final proportions of 25, 0.8 and 5% by weight at -70°C, and then increasing the temperature of the system up to room temperature. The mole ratio of the monomer to the oxidizing agent is 2 in the case of Fig. 1 and 0.5 in Fig. 2. In these Figures, fine tantalum particles and a surrounding oxide film layer can be observed. Further, polypyrrole is formed such that it is in close contact with the oxide film surface. It will be obvious that where the mole ratio of the monomer to the oxidizing agent is 2, the mean grain sizes of polypyrrole are no greater than 0.2 µm.

The solid electrolytic capacitor according to the invention is completed by, if necessary, mounting electrodes in a well-known process using silver paste and carbon paste and then molding the system.

### EXAMPLE 1

An oxidizing agent solution was prepared by adding 5 grams of distilled water to 95 grams of a methanol solution containing 31.6% by weight of ferric dodecylbenzene sulfonic acid and cooling the resultant solution to -70°C. To this oxidizing agent solution, 20 grams of a methanol solution containing 1.92 grams of dissolved pyrrole was added, and the resultant solution was stirred sufficiently, whereby a blend solution composed of ferric dodecylbenzene sulfonic acid and one mol of pyrrole with respect to ferric dodecylbenzene sulfonic acid was obtained (sample (1a) as shown in Table 1). Likewise, 20 grams of methanol solutions containing 2.88 and 3.84 grams, respectively, of dissolved pyrrole was added to the oxidizing agent solution cooled down to -70°C, followed by stirring, whereby the blend solutions composed of ferric dodecylbenzene sulfonic acid and pyrrole, with the pyrrole being of 1.5 and 2 mols with respect to ferric dodecylbenzene sulfonic acid, were obtained (samples (1b) and (1c) in Table 1).

Then, a rectangular sintered tantalum fine powder pellet of 3mm × 2mm × 2.5mm was anode oxidized at a formation voltage of 100 V using an aqueous solution containing 0.05% by weight of phosphoric acid, followed by cleaning and drying, whereby a pellet showing a capacitance of 10 µF in electrolyte was obtained. The pellet thus prepared was dipped in each of the above three different blend solutions held at -70°C. After 60 seconds, the pellet was taken out and held in air at 25°C for 30 minutes for polymerization of pyrrole, followed by cleaning with methanol and drying. The above polymerization, cleaning and drying were carried out repeatedly four times, and then lead electrodes of silver paste were mounted on each pellet, whereby a solid electrolytic capacitor comprising polypyrrole as an electrolyte was obtained.

The mean grain size of fine polypyrrole particles of each capacitor determined from a scanning electron microscope image of a pellet section and the capacitance of the capacitor at 120 Hz, are shown in Table 1. All the capacitors obtained were found to comprise polypyrrole with mean grain sizes no greater than 0.2 µm as an electrolyte. They also had capacitances no less than 9 µF, thus showing satisfactory capacitance efficiency factors.

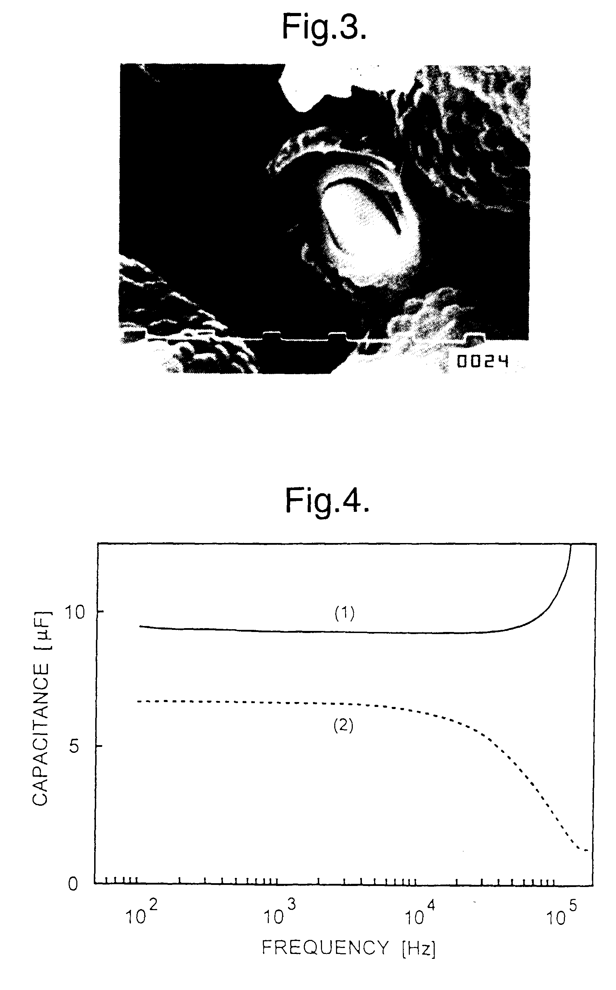

Curve (1) in Fig. 4 represents the frequency characteristics of the electrostatic capacitance of sample (1a). There is almost no change in the electrostatic capacitance up to a high frequency range, thus showing that the solid electrolytic capacitor in this example has excellent frequency characteristics.

### COMPARISON EXAMPLE 1

An oxidizing agent solution was prepared by adding distilled water to a methanol solution containing 30% by weight of dissolved ferric dodecylbenzene sulfonic acid and cooling the resultant solution in the manner as in Example 1. To this oxidizing agent solution was added 20 grams of methanol solutions containing 0.77, 0.96 and 1.44 grams, respectively, of pyrrole, followed by sufficient stirring, whereby the blend solutions composed of ferric dodecylbenzene sulfonic acid and pyrrole, with pyrrole being of 0.4, 0.5 and 0.75 mols with respect to ferric dodecylbenzene sulfonic acid, were obtained (comparison samples (1a), (1b) and (1c)).

Then, using a tantalum pellet as in Example 1 the polymerization, cleaning and drying of pyrrole were carried out repeatedly four times, followed by mounting of lead electrodes of silver paste, whereby the solid electrolytic capacitor comprising polypyrrole as an electrolyte was obtained.

The mean grain sizes of fine polypyrrole particles of each capacitor determined from a scanning electron microscope photograph of a pellet section and the capacitance of the capacitor at 120 Hz are shown in Table 1. All the capacitors obtained comprised polypyrrole with mean grain sizes no less than 0.2 µm and had insufficient capacitances no greater than 7 µF. These capacitors were each treated at 200°C for 15 minutes and then observed with the scanning electron microscope. Separation of polypyrrole from the dielectric surface as shown in Fig. 3 was observed.

### EXAMPLE 2

An oxidizing agent solution was prepared in the manner as in Example 1 except for using ferric butylnaphthalene sulfonic acid in lieu of ferric dodecylbenzene sulfonic acid. To this oxidizing agent solution was added 20 grams of methanol solutions containing 2.34, 3.51 and 4.68 grams, respectively, of dissolved pyrrole, followed by sufficient stirring, whereby the blend solutions containing ferric butylnaphthalene sulfonic acid and pyrrole, with the pyrrole being of 1.0, 1.5 and 2.0 mols with respect to the ferric butylnaphthalene sulfonic acid, were obtained (samples (2a), (2b) and (2c)).

Then, using a tantalum pellet as in Example 1, the polymerization, cleaning and drying of pyrrole were carried out four times, followed by mounting of lead electrodes with silver paste, whereby the solid electrolytic capacitor comprising polypyrrole as an electrolyte was obtained.

The mean grain sizes of fine particles of polypyrrole of each capacitor as determined from a scanning electron microscope photograph of a pellet section and the capacitance of the capacitor at 120 Hz are shown in Table 1. All the capacitors obtained comprised polypyrrole with mean grain sizes no greater than 0.2 µm as an electrolyte and had capacitances no less than 9 µF, thus showing satisfactory capacitor efficiency factors.

### COMPARISON EXAMPLE 2

An oxidizing agent solution was prepared by adding distilled water to a methanol solution containing 30% by weight of ferric butylnaphthalene sulfonic acid and subsequent cooling in the manner as in Example 2. To this oxidizing agent solution was added 20 grams of methanol solutions containing 0.93, 1.17 and 1.76 grams, respectively, of pyrrole, followed by sufficient stirring, whereby the blend solutions composed of ferric butylnaphthalene sulfonic acid and pyrrole, with the pyrrole being of 0.4, 0.5 and 0.75 moles with respect to the ferric butylnaphthalene sulfonic acid were obtained (comparison samples (2a), (2b) and (2c)).

Then, using a tantalum pellet as in Example 1 the polymerization, cleaning and drying of pyrrole were carried out repeatedly four times in the manner as in Example 1, followed by mounting of lead electrodes of silver paste, whereby the solid electrolytic capacitor comprising polypyrrole as an electrolyte was obtained.

The mean grain sizes of fine particles of pyrrole of each capacitor as determined from a scanning electron microscope photograph of a pellet section and the capacitance of the capacitor at 120 Hz are shown in Table 1. All the capacitors obtained comprised polypyrrole with mean grain sizes no less than 0.2 µm as an electrolyte and had insufficient capacitances no greater than 7 µF.

Broken curve (2) in Fig. 4 represents the frequency characteristics of the electrostatic capacitance of the comparison sample (2c). As shown, the electrostatic capacitance is greatly reduced in a high frequency range, thus showing that the frequency characteristics of the solid electrolytic capacitors in this comparison example are insufficient.

### EXAMPLE 3

An oxidizing agent solution was prepared in the manner as in Example 1 except for using cupric butylnaphthalene sulfonic acid in lieu of ferric dodecylbenzene sulfonic acid. To this oxidizing agent solution was added 20 grams of methanol solutions containing 3.36, 5.03 and 6.71 grams, respectively, of pyrrole, followed by sufficient stirring, whereby the blend solutions composed of cupric butylnaphthalene sulfonic acid and pyrrole, with the pyrrole being of 1.0, 1.5 and 2.0 mols with respect to the cupric butylnaphthalene sulfonic acid, were obtained (samples (3a), (3b) and (3c)).

Then, using a tantalum pellet as in Example 1 the polymerization, cleaning and drying of pyrrole was carried out repeatedly four times in the manner as in Example 1, and then lead electrodes of silver paste were mounted, whereby the solid electrolytic capacitor with polypyrrole as an electrolyte was obtained.

The mean grain sizes of fine particles of polypyrrole of each capacitor as determined from a scanning electron microscope photograph of a pellet section and the capacitance of the capacitor at 120 Hz are shown in Table 1. All the capacitors obtained comprised polypyrrole with mean grain sizes no greater than 0.2 µm as an electrolyte and had capacitances no less than 9 µF, thus showing satisfactory capacitance efficiency factors.

### COMPARISON EXAMPLE 3

An oxidizing agent solution was prepared by adding distilled water to a methanol solution containing 30% by weight of dissolved cupric butylnaphthalene sulfonic acid and subsequent cooling in the manner as in Example 2. To this oxidizing agent solution was added 20 grams of methanol solutions containing 1.34, 1.68 and 2.52 grams, respectively, of pyrrole, followed by sufficient stirring, whereby the blend solutions composed of cupric butylnaphthalene sulfonic and pyrrole, with the pyrrole being of 0.4, 0.5 and 0.75 mols with respect to the cupric butylnaphthalene sulfonic, were obtained (comparison samples (3a), (3b) and (3c)).

Then, using a tantalum pellet as in Example 1 the polymerization, cleaning and drying of pyrrole were carried out repeatedly four times in the manner as in Example 1, and then lead electrodes of silver paste were mounted, whereby the solid electrolytic capacitor with polypyrrole as an electrolyte was obtained.

The mean grain sizes of fine particles of polypyrrole of each capacitor as determined from a scanning electron microscope photograph of a pellet section and the capacitance of the capacitor at 120 Hz are shown in Table 1. All the capacitors obtained comprised polypyrrole with mean grain sizes no less than 0.2 µm as an electrolyte and had insufficient capacitances no greater than 7 µF.

### COMPARISON EXAMPLE 4

An oxidizing agent solution was prepared in the manner as in Example 1 except for adding no distilled water. To this oxidizing agent solution was added 20 grams of a methanol solution containing 3.84 grams of dissolved pyrrole, followed by sufficient stirring, whereby a blend solution composed of ferric dodecylbenzene sulfonic acid and pyrrole, with the pyrrole being of 2.0 mols with respect to the ferric dodecylbenzene sulfonic acid, was obtained. In this case, blackening of the reacted solution occurred immediately after the addition of pyrrole solution.

Then, using a tantalum pellet as in Example 1, the polymerization, cleaning and drying of pyrrole were carried out repeatedly four times in the manner as in Example 1. In this case, no formation of polypyrrole in pellet pores was observed. Therefore, it was impossible to obtain evaluation of the solid electrolytic capacitor.

Further, an oxidizing agent solution was prepared in the manner as in Example 1 except that 1 gram of distilled water was added. To this oxidizing agent solution was added 20 grams of a methanol solution containing 3.84 grams of dissolved pyrrole, followed by sufficient stirring, whereby the blend solution composed of ferric dodecylbenzene sulfonic acid and pyrrole, with the pyrrole being of 2.0 moles with respect to the ferric dodecylbenzene sulfonic acid, was obtained.

Then, using a tantalum pellet as in Example 1 the polymerization, cleaning and drying of pyrrole were carried out repeatedly four times in the manner as in Example 1, and then lead electrodes of silver paste were mounted, whereby the solid electrolytic capacitor with polypyrrole as an electrolyte was obtained.

The capacitance of the capacitor at 120 Hz is shown in Table 1. In the capacitor obtained, polypyrrole constituting an electrolyte was not in the form of grains but in a solidified non-granular form. In addition, the capacitance was no greater than 1 µF and was insufficient.

**TABLE 1**

| | Oxidizing Agent | Monomer/Oxidizing Agent (mol/mol) | Water (wt.%) | Grain size (µm) | Capacitance (µF) |
|---|---|---|---|---|---|
| Example | | | | | |
| (1a) | Fe(DBS)₃ | 1.0 | 5 | 0.15 | 9.4 |
| (1b) | " | 1.5 | 5 | 0.10 | 9.5 |
| (1c) | " | 2.0 | 5 | 0.10 | 9.4 |
| (2a) | Fe(BNS)₃ | 1.0 | 5 | 0.10 | 9.6 |
| (2b) | " | 1.5 | 5 | 0.08 | 9.5 |
| (2c) | " | 2.0 | 5 | 0.06 | 9.5 |
| (3a) | Cu(BNS)₂ | 1.0 | 5 | 0.08 | 9.6 |
| (3b) | " | 1.5 | 5 | 0.07 | 9.7 |
| (3c) | " | 2.0 | 5 | 0.05 | 9.7 |
| Comparison Example | | | | | |
| (1a) | Fe(DBS)₃ | 0.4 | 5 | 1.1 | 2.5 |
| (1b) | " | 0.5 | 5 | 0.60 | 4.5 |
| (1c) | " | 0.75 | 5 | 0.45 | 5.2 |
| (2a) | Fe(BNS)₃ | 0.4 | 5 | 0.50 | 4.1 |
| (2b) | " | 0.5 | 5 | 0.45 | 5.8 |
| (2c) | " | 0.75 | 5 | 0.30 | 6.5 |
| (3a) | Cu(BNS)₂ | 0.4 | 5 | 0.70 | 4.0 |
| (3b) | " | 0.4 | 5 | 0.40 | 5.5 |
| (3c) | " | 0.75 | 5 | 0.35 | 6.7 |
| 4 | Fe(DBS)₃ | 2.0 | 0 | - | - |
| | | 2.0 | 1 | - | 0.55 |

As has been described in the foregoing, according to the invention it is possible to provide a solid electrolytic capacitor, which has large capacitance efficiency factors, excellent frequency characteristics and improved reliability, and also a simplified method of manufacturing the same, which is greatly beneficial.

While the invention has been described in its preferred embodiments, it is to be understood that the words which have been used are words of description rather than limitation of the scope of the invention as defined by the claims.

## Claims

1. A solid electrolytic capacitor characterized by comprising, as an electrolyte, polypyrrole being in a grain form with mean grain sizes no greater than 0.2µm, obtainable by oxidatively polymerizing an oxidizing agent composed of a sulfonic acid compound as an anion and a metal cation selected from Ag⁺, Cu²⁺, Fe³⁺, Al³⁺, Ce⁴⁺, W⁶⁺, Cr⁶⁺, Mn⁷⁺ and Sn⁴⁺ with pyrrole as a monomer, wherein said polymerization uses a polymerization solution containing a mixture of an oxidizing agent and the pyrrole and no less than 2% by weight of water, the mole ratio of the monomer to the oxidizing agent being unity or above.

2. A method of manufacturing a solid electrolytic capacitor having, as an electrolyte, polypyrrole which is in a grain form with mean grain sizes no greater than 0.2µm synthesized by oxidatively polymerizing an oxidizing agent composed of a sulfonic acid compound as an anion and a metal cation selected from Ag⁺, Cu²⁺, Fe³⁺, Al³⁺, Ce⁴⁺, W⁶⁺, Cr⁶⁺, Mn⁷+ and Sn⁴⁺ with pyrrole as a monomer, said method comprising a step of polymerization using a polymerization solution containing a mixture of the oxidizing agent and the pyrrole and no less than 2% by weight of water, the mole ratio of the monomer to the oxidizing agent being unity or above.

3. The method of manufacturing solid electrolytic capacitor according to claim 2, in which said metal cation of the oxidizing agent is one of a ferric ion and a cupric ion, and said sulfonic acid compound as the anion of the oxidizing agent is a naphthalene sulfonic acid ion.

4. The method of manufacturing solid electrolytic capacitor according to claim 2, in which said metal cation of the oxidizing agent is a ferric ion, and said sulfonic acid compound as the anion of the oxidizing agent is a benzosulfonic acid ion having an alkyl substitute product group.

## Patentansprüche

1. Festelektrolytkonsensator, dadurch gekennzeichnet, daß er als Elektrolyt Polypyrrol in körniger Form mit mittleren Korngrößen von nicht mehr als 0,2 µm aufweist, das durch oxidatives Polymerisieren eines Oxidationsmittels zu erhalten ist, das aus einer Sulfonsäureverbindung als Anion und einem Metall-Kation zusammengesetzt ist, das aus Ag⁺, Cu²⁺, Fe³⁺, Al³⁺, Ce⁴⁺, W⁶⁺, Cr⁶⁺, Mn⁷⁺ und Sn⁴⁺ ausgewählt ist, mit Pyrrol als Monomer, wobei die Polymerisation eine Polymerisationslösung verwendet, die eine Mischung eines Oxidationsmittels und des Pyrrols und nicht weniger als 2 Gewichtsprozent von Wasser enthält, wobei das Molverhältnis des Monomers zum Oxidationsmittel eins oder mehr beträgt.

2. Verfahren zum Herstellen eines Festelektrolytkondensators, der als Elektrolyt Polypyrrol in körniger Form mit mittleren Korngrößen von nicht mehr als 0,2 µm aufweist, die durch oxidatives Polymerisieren eines Oxidationsmittels, das aus einer Sulfonsäureverbindung als Anion und einem Metallkation besteht, das aus Ag⁺, Cu²⁺, Fe³⁺, Al³⁺, Ce⁴⁺, W⁶⁺, Cr⁶⁺, Mn⁷⁺ und Sn⁴⁺ ausgewählt ist, mit Pyrrol als Monomer synthetisiert ist, welches Verfahren den Schritt der Polymerisation unter Verwendung einer Polymerisationslösung aufweist, die eine Mischung des Oxidationsmittels und des Pyrrols und nicht weniger als 2 Gewichtsprozent Wasser aufweist, wobei das Molverhältnis des Monomers zum Oxidationsmittel eins oder mehr beträgt.

3. Verfahren zum Herstellen eines Festelektrolytkondensators nach Anspruch 2, bei dem das Metall-Kation des Oxidationsmittels ein Eisen(III)-Ion oder ein Kupfer(II)-Ion ist und die Sulfonsäureverbindung als Anion des Oxidationsmittels ein Naphthalinsulfonsäure-Ion ist.

4. Verfahren zum Herstellen eines Festelektrolytkondensators nach Anspruch 2, in dem das Metall-Kation des Oxidationsmittels ein Eisen(III)-Ion ist und die Sulfonsäureverbindung als das Anion des Oxidationsmittels ein Bezosulfonsäure-Ion ist, das eine Alkylsubstitutionsproduktgruppe aufweist.

## Revendications

1. Condensateur à électrolyte solide caractérisé en ce qu'il comprend, en tant qu'électrolyte, un polypyrrole étant sous forme granulaire avec une granulométrie moyenne ne dépassant pas 0,2 µm, que l'on peut obtenir par polymérisation oxydative d'un agent d'oxydation composé d'un composé d'acide sulfonique en tant qu'anion et d'un cation de métal choisi parmi Ag⁺, Cu²⁺, Fe³⁺, Al³⁺, Ce⁴⁺, W⁶⁺, Cr⁶⁺, Mn⁷⁺ et Sn⁴⁺ avec un pyrrole en tant que monomère, dans lequel ladite polymérisation utilise une solution de polymérisation contenant 'un mélange d'un agent d'oxydation et le pyrrole et pas moins de 2% en poids d'eau, le rapport molaire du monomère à l'agent d'oxydation étant égal à un ou plus.

2. Procédé de fabrication d'un condensateur à électrolyte solide ayant, en tant qu'électrolyte, un polypyrrole qui est sous forme granulaire avec une granulométrie moyenne ne dépassant pas 0,2 µm synthétisé par polymérisation oxydative d'un agent d'oxydation composé d'un composé d'acide sulfonique en tant qu'anion et d'un cation de métal choisi parmi Ag⁺, Cu²⁺, Fe³⁺, Al³⁺, Ce⁴⁺, W⁶⁺, Cr⁶⁺, Mn⁷⁺ et Sn⁴⁺ avec un pyrrole en tant que monomère, ledit procédé comprenant une étape de polymérisation utilisant une solution de polymérisation contenant un mélange de l'agent d'oxydation et le pyrrole et pas moins de 2% en poids d'eau, le rapport molaire du monomère à l'agent d'oxydation valant un ou plus.

3. Procédé pour fabriquer un condensateur à électrolyte solide selon la revendication 2, dans lequel ledit cation de métal de l'agent d'oxydation est un élément parmi un ion ferrique et un ion cuprique, et ledit composé d'acide sulfonique en tant qu'anion de l'agent d'oxydation est un ion naphtalènesulfonique.

4. Procédé pour fabriquer un condensateur à électrolyte solide selon la revendication 2, dans lequel ledit cation de métal de l'agent d'oxydation est un ion ferrique, et ledit composé d'acide sulfonique en tant qu'anion de l'agent d'oxydation est un ion acide benzosulfonique ayant un groupe de substitution alkyle.
